# EUROPEAN PATENT SPECIFICATION

(11) **EP 2 930 089 B1**
(45) Date of publication and mention of the grant of the patent: **17.04.2019**
(21) Application number: 13863184.1
(22) Date of filing: 29.11.2013
(51) Int. Cl.: B62D 61/12, B60G 11/46, B60G 9/00, B60G 17/005

(54) **FASTENING SYSTEM**
BEFESTIGUNGSSYSTEM
SYSTÈME DE FIXATION

(30) Priority: 10.12.2012 ES 201231916
(43) Date of publication of application: 14.10.2015
(73) Proprietor: Accesorios y Elevadores Valencia, S.L., 46530 Puzol (Valencia) (ES)
(72) Inventor: MORENO IBAÑEZ, Alberto, E-46530 Valencia (ES)
(74) Representative: Isern Patentes y Marcas S.L.
(86) International application number: PCT/ES2013/070830
(87) International publication number: WO 2014/091041

(56) References cited:
- EP-A1- 0 836 984
- EP-A1- 0 836 984
- EP-A1- 0 941 915
- EP-A1- 0 941 915
- EP-A1- 1 661 739
- EP-A2- 1 902 933
- ES-T3- 2 365 398
- ES-T3- 2 380 943
- ES-U- 1 051 061
- US-A1- 2012 061 936
- US-A1- 2012 061 936

## Description

### OBJECT OF THE INVENTION

The object of the present invention patent is to register a fastening system, which incorporates notable innovations and advantages.

More specifically, the invention proposes the development of a fastening system, which makes it possible to connect, in an effective and simple way, a lifting support associated with a lifting spring to a suspension support, which forms part of a piece of semi-trailer, trailer or similar suspension equipment.

### BACKGROUND OF THE INVENTION

Several devices used to lift rolling trailer or semi-trailer axles, provided with pneumatic suspension based on the use of a spring, bellows or membrane, are currently known about in the state of the art. As such, in a known embodiment, there is a lifting support associated with a lifting spring, which may be connected to a suspension support, which forms part of a piece of suspension equipment in the semi-trailer.

Nevertheless, one advantage brought about by this arrangements resides in the difficulty of mounting the suspension assembly, since this is done on the already assembled vehicle or trailer, thereby meaning it could mean having to dismount a certain component or components of the vehicle or trailer, in order to be able to install said suspension assembly. As such, the need to find a fastening system capable of resolving this problem still exists.

EP 1 661 739 discloses a spacing arm for a lift of a rolling axle of industrial vehicles, trailers and semi-trailers similar to the present invention, intended for being incorporated in lifting devices of the type consisting of side parts coupled in a transverse bolt linking in an articulated manner a support of the pneumatic suspension and a leaf spring arm of a certain axle to be lifted, wherein common features are disclosed in preamble of claim 1.

Also, It is know from EP 0 941 915 an axle lifting device for vehicles, having a bearing arm for a wheel axle which runs in the longitudinal direction of the vehicle from a carrying bracket fixed to the chassis of the vehicle to the wheel axle of the vehicle, and having a spring system operating between the wheel axle and the chassis, comprising a pneumatic expansion element which is fitted between the bearing arm and a support fitted below the bearing arm and connected to the carrying bracket or the chassis.

### INVENTION DESCRIPTION

The present invention was developed with the aim of providing a fastening system designed as a novelty within the field of application, which resolves the abovementioned limitations and furthermore contributes other, additional advantages, which shall become evident as of the description provided below.

As such, an object of the present invention constitutes providing a fastening system for connecting a lifting support associated with a lifting spring to a suspension support, which forms part of a piece of semi-trailer, trailer or similar suspension equipment, which is characterised in that it comprises an anchoring plate, made up of a laminar body that is essentially arched in form, which has an open connecting region with a curvature radius that complements the diameter of a pivoting bolt located in the suspension support, a nut screw-coupled to one end of said pivoting bolt or any other associated element around said pivoting bolt (for example, a socket or washer), said anchoring plate being provided with a pair of through openings in which to insert anchoring screws, which pass through at least one through opening present in the lifting support. In the present memory, the diameter of the bolt is understood to be the diameter of the head of the pivoting bolt, which may be circular or hexagonal in contour. The lifting support may furthermore be made up of just one single piece or in an alternative embodiment, of an upper lifting support and a lower lifting support, connected to one another.

These characteristics make it possible to obtain an alternative fastening system, which makes it possible to connect the abovementioned lifting support to the suspension support of the wheels of the trailer or similar, in a completely rigid manner (i.e., without it being possible for them to rotate), without it being necessary to dismount any part of the suspension, thereby facilitating mounting and making the mounting process easier.

According to another aspect of the invention, the lifting support has a region made up of two extensions separated by a curved area in order to partially envelop the pivoting bolt or any other associated element around said pivoting bolt, each one of the extensions having one of the through openings into which the anchoring screws are to be inserted.

The fastening system may advantageously include a number of locking means in order to keep the lifting support in a fixed position in relation to the suspension support, thereby preventing the lifting support from rotating when it is not in use. In an exemplary embodiment, said locking means may comprise a fastener mounted at one point of a supporting bar, said fastener being susceptible to being inserted in a removable manner into a housing present in the suspension support.

Further characteristics and advantages of the fastening system object of the present invention shall become evident as of the description of a preferred but non-exclusive embodiment illustrated by way of non-limiting example in the accompanying drawings below, wherein:

### BRIEF DESCRIPTION OF THE DRAWINGS

Figure 1.- Is an schematised elevation view of a piece of conventional semi-trailer suspension equipment provided with the fastening system according to the invention;
Figure 2.- Is a side and front elevation view of a first mounting stage between the lifting support and the suspension support, based on a first embodiment of the system according to the present invention;
Figure 3.- Is a side and front elevation view of a second mounting stage of the system shown in Figure 1;
Figure 4.- Is a side and front elevation view of a second embodiment of the fastening system which does not form part of the present invention;
Figure 5., Is a sequence showing the mounting of the fastening system shown in Figure 4;
Figure 6.- Is a detailled cross-sectional view of one area of Figure 4, indicated with a dashed circle, where the anchoring plate, an anchoring screw, an upper lifting support and a lower lifting support are coupled;
Figure 7.- Is a side and front elevation view of another alternative embodiment of the fastening system provided with regulation and locking means and
Figure 8.- Is a side and front elevation view of an alternative embodiment of the regulation means.

### DESCRIPTION OF A PREFERRED EMBODIMENT

In view of the drawings referred to and in accordance with the numbering adopted therein, it is possible to observe an exemplary preferred embodiment of the invention, which comprises the parts and elements indicated and described in detail below.

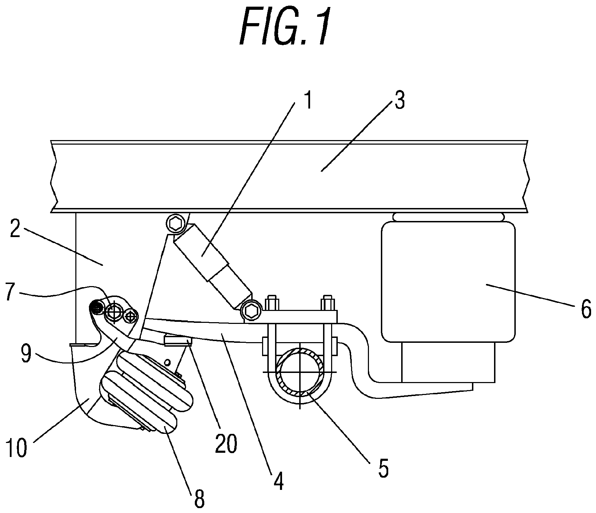

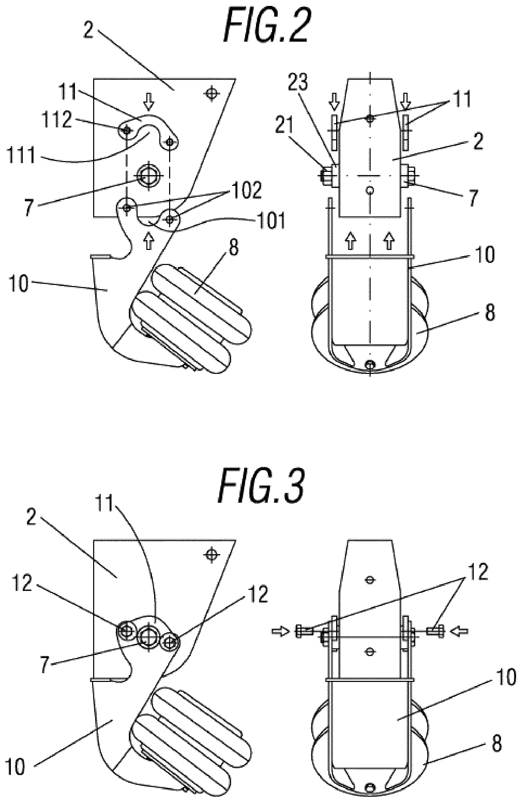

As such, as can be seen in Figure 1, it is possible to observe a piece of suspension equipment provided with a shock-absorber (1), which at one end, is connected to a suspension support (2) fixed to the chassis (3) of a trailer. The other end of the shock-absorber (1) is connected to a suspension arm (4) that supports a wheel axle (5), at the end of which there is a suspension spring (6) made up of a pneumatic spring that makes it possible to ensure air pressure is proportional to the load supported, with the aim of keeping the vehicle at a constant height. The suspension support (2) is crossed transversally by a pivoting bolt (7) with a hexagonal head, which passes through a through opening, including a self-locking nut (21) at one end (see Figure 2).

A lifting support in which a lifting spring (8) is supported is provided for, said lifting support being made up of an upper lifting support (9) and a lower lifting support (10). It must be noted that the upper lifting support (9) includes a pusher (20), which acts on and comes into contact with the suspension arm (4).

As such, in the event of it being necessary to lift the wheel axle (5), one must simply inject pressurised air into the lifting spring (8), which in turn moves the suspension arm (4) upwards, thereby causing the wheel axle (5) to lift.

As can be seen in Figure 2, in order to create the connection between the lower lifting support (10) associated with the lifting spring (8) and the suspension support (2) together, a fastening system is provided for at each side, which comprises an anchoring plate (11) made up of a laminar body that is essentially arched in form, which has an open connecting region (111) with a curvature radios that complements the diameter of an associated socket (23) around the pivoting bolt (7). The anchoring plate (11) is provided with a pair of through openings (112), which make it possible for anchoring screws that pass through a pair of through openings present in the lifting support to be inserted.

The lower lifting support (10) has a region (101) with a pair of extensions separated by a curved area designed to partially envelop the pivoting bolt (7), each one of the extensions having a through opening (102) in which to insert the anchoring screws (12).

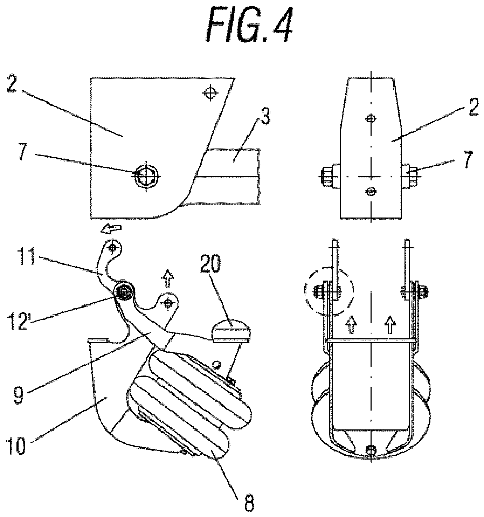

In the embodiment shown in Figures 2 and 3, the lifting support only has one piece, unlike the lifting support shown in Figures 1 and 4 and the anchoring plates (11) are initially separated from the lifting support, the coupling between both being made by means of moving the pieces closer to one another, as shown by means of the arrows, in order to subsequently fit the anchoring screws (12).

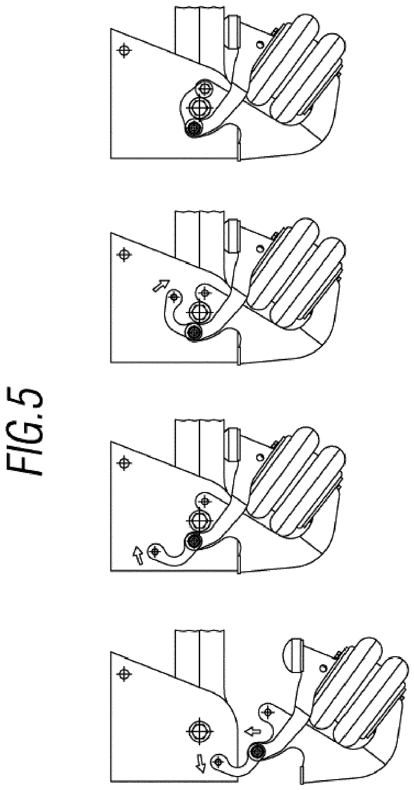

In the embodiment shown in Figures 4 to 6 which does not form part of the invention, the main difference from the previous embodiment is that the anchoring plates (11) are previously mounted in a hinged manner to the upper and lower lifting supports (9, 10) via an anchoring screw (12'), such that when mounting this assembly on the pivoting bolt (7), it is only necessary to rotate the anchoring plates (11) in order to align the remaining through opening (112) with the through opening (102) that does not yet have the anchoring screw (12) and subsequently fit the second anchoring screw (12), as can be seen in the sequence depicted in Figure 5. It must also be noted that the anchoring screw (12') also serves as a pivoting connection for the upper lifting support (9).

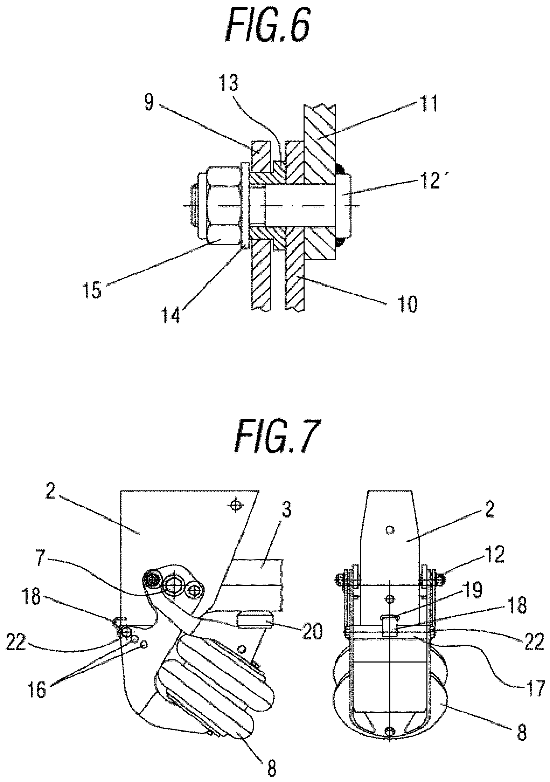

Moreover, with particular reference to Figure 6, an anchoring socket (13) crossed by the anchoring screw (12') is provided for, the same being located between the lower lifting support (10) and a washer (14) supported at one end of the anchoring screw (12'), which is fixed by means of a nut (15), the upper lifting support (9) not being tightened, therefore meaning it can pivot on the anchoring socket (13). As can be seen, the anchoring screw (12') is joined to the anchoring plate (11) by means of soldering.

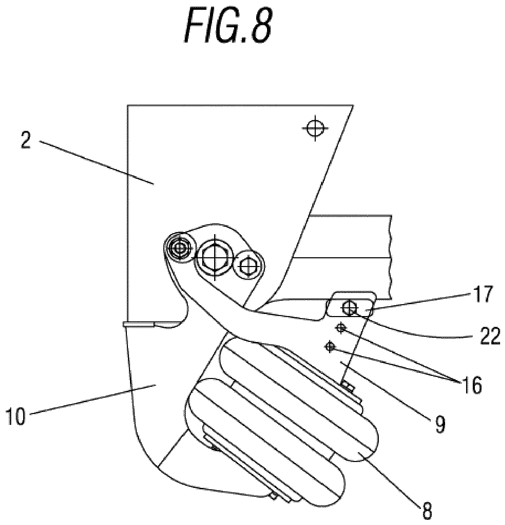

Figure 7 represents another alternative embodiment, wherein the same parts have the same reference numbers. In addition and advantageously, a number of regulation means are provided for, in order to position the lower lifting support (10) in relation to the suspension support (2), these means comprising a plurality of aligned openings (16) arranged on two opposite sides of the lower lifting support (10) through which a number of screws (22) may be fitted, which support a supporting bar (17) arranged crosswise, as can be seen in Figure 6. As such, according to the position selected via the supporting bar (17), the lower lifting support (10) (as well as the pieces associated with the same) will rotate relative to the suspension support (2) in order to adopt the angular position best suited to the range of operational heights, in such a way that it can adapt to different possible useful rungs in a ladder on the same suspension model. Figure 8 shows an alternative embodiment of the regulation means described above, however this time, the plurality of aligned openings (16) are located in the upper lifting support (9).

Figure 7 also shows a number of locking means with which to keep the lifting support in a fixed position in relation to the suspension support (2), in order to prevent the lifting support from rotating when it is not in use, as well as preventing noise caused by the supporting bar (17) potentially bumping against the base of the suspension support (2). Said locking means comprise a fastener (18), preferably in the form of a hook, which is mounted to the supporting bar (17) and is susceptible to being inserted into a housing (19) present in the suspension support (2).

The details, shapes, dimensions and other accessory elements, as well as the materials used to manufacture the fastening system of the invention, may be suitably substituted for others which are technically equivalent, and do not diverge from the essential nature of the invention, nor the scope defined by the claims included below.

## Claims

1. A fastening system for connecting a lifting support associated with a lifting spring (8) to a suspension support (2), which forms part of a piece of semi-trailer, trailer or similar suspension equipment, **characterised in that** it comprises an anchoring plate (11) made up of a laminar body that is essentially arched in form, which has an open connecting region (111) with a curvature radius substantially complementary to the diameter of a pivoting bolt (7) located in the suspension support (2), a nut (21) screw-coupled to one end of said pivoting bolt (7) or any other associated element around said pivoting bolt (7), said anchoring plate (11) being provided with a pair of through openings (112) in which to insert anchoring screws (12, 12'), capable of passing through at least one through opening present in the lifting support (10), wherein the lifting support (10) has a region made up of two extensions separated by a curved area in order to partially envelop the pivoting bolt (7) or any other associated element around said pivoting bolt (7), each one of the extensions having one of the through openings into which the anchoring screws (12, 12') are to be inserted.

2. The fastening system according to claim 1, **characterised in that** an anchoring socket (13) crossed by the anchoring screw (12') is provided for and located between a lower lifting support (10) and a washer (14), supported at one end of the anchoring screw (12'), the anchoring screw (12') being connected solidarity to the anchoring plate (11).

3. The fastening system according to claim 1, **characterised in that** it presents regulation means with which to position the lifting support in relation to the suspension support (2).

4. The fastening system according to claim 3, **characterised in that** the regulation means constitute a plurality of aligned openings (16), which are arranged on two opposite sides of the lifting support (9, 10) via which a supporting bar (17) is susceptible to pass.

5. The fastening system according to claim 1, **characterised in that** it includes locking means with which to keep the lifting support in a fixed position in relation to the suspension support (2).

6. The fastening system according to any of the claims 3 to 5, **characterised in that** the locking means comprise a fastener (18), which is mounted to a point on the supporting bar (17) and is susceptible to being inserted in a removable manner into a housing (19) present in the suspension support (2).

7. The fastening system according to claim 2, **characterised in that** the anchoring screw (12') is joined to the anchoring plate (11) by means of soldering.

## Patentansprüche

1. Befestigungssystem zum Verbinden einer einer einer Hubfeder (8) zugeordneten Hubstütze mit einer Aufhängungsstütze (2), die Teil eines Sattelanhängers, Anhängers oder einer ähnlichen Aufhängungsvorrichtung ist, **dadurch gekennzeichnet, dass** es eine Verankerungsplatte (11) umfasst, die aus einem laminaren Körper besteht, der im Wesentlichen eine gewölbte Form aufweist, die einen offenen Verbindungsbereich (111) mit einem Krümmungsradius aufweist, der im Wesentlichen komplementär zum Durchmesser eines in der Aufhängungsstütze (2) angeordneten Schwenkbolzens (7) ist, eine Mutter (21), die mit einem Ende des Schwenkbolzens (7) oder einem anderen zugehörigen Element um den Schwenkbolzen (7) herum durch Verschraubung gekoppelt ist, wobei die Verankerungsplatte (11) mit einem Paar Durchgangsöffnungen (112) versehen ist, in die Verankerungsschrauben (12, 12') eingesetzt werden können, die durch mindestens eine Durchgangsöffnung in der Hubstütze (10) hindurchgehen können, wobei die Hubstütze (10) einen Bereich aufweist, der aus zwei Verlängerungen besteht, die durch einen gekrümmten Bereich getrennt sind, um den Schwenkbolzen (7) oder ein anderes zugehöriges Element um den Schwenkbolzen (7) herum teilweise zu umschließen, wobei jede der Verlängerungen eine der Durchgangsöffnungen aufweist, in die die Verankerungsschrauben (12, 12') eingeführt werden sollen.

2. Befestigungssystem nach Anspruch 1, **dadurch gekennzeichnet, dass** eine von der Verankerungsschraube (12') gekreuzte Verankerungshülse (13) vorgesehen und zwischen einer unteren Hubstütze (10) und einer Unterlegscheibe (14) angeordnet ist, die an einem Ende der Verankerungsschraube (12') abgestützt ist, wobei die Verankerungsschraube (12') solidarisch mit der Verankerungsplatte (11) verbunden ist.

3. Befestigungssystem nach Anspruch 1, **dadurch gekennzeichnet, dass** es Regulierungsmittel vorsieht, mit denen die Hubstütze in Bezug auf die Aufhängungsstütze (2) positioniert werden kann.

4. Befestigungssystem nach Anspruch 3, **dadurch gekennzeichnet, dass** die Regulierungsmittel eine Vielzahl von ausgerichteten Öffnungen (16) bilden, die auf zwei gegenüberliegenden Seiten der Hubstütze (9, 10) angeordnet sind, durch die eine Stützstange (17) hindurchgehen kann.

5. Befestigungssystem nach Anspruch 1, **dadurch gekennzeichnet, dass** es Verriegelungsmittel beinhaltet, mit denen die Hubstütze in einer festen Position in Bezug auf die Aufhängungsstütze (2) gehalten wird.

6. Befestigungssystem nach einem der Ansprüche 3 bis 5, **dadurch gekennzeichnet, dass** die Verriegelungsmittel ein Befestigungselement (18) umfassen, welches an einer Stelle an der Stützstange (17) montiert ist und fähig ist, abnehmbar in ein Gehäuse (19), das in der Aufhängungsstütze (2) vorhanden ist, eingesetzt zu werden.

7. Befestigungssystem nach Anspruch 2, **dadurch gekennzeichnet, dass** die Verankerungsschraube (12') durch Löten mit der Verankerungsplatte (11) verbunden ist.

## Revendications

1. Système de serrage pour le raccordement d'un support de levage associé à un ressort de levage (8) à un support de suspension (2), qui fait partie d'une pièce d'un semi-remorque, d'une remorque ou d'un équipement de suspension similaire, **caractérisé en ce qu'**il comprend une plaque d'ancrage (11) constituée d'un corps laminaire qui est essentiellement arqué en forme, qui a une région de raccordement ouverte (111) avec un rayon de courbure sensiblement complémentaire au diamètre d'un boulon pivotant (7) situé dans le support de suspension (2), un écrou (21) couplé par vissage à une extrémité dudit boulon pivotant (7) ou tout autre élément associé autour dudit boulon pivotant (7), ladite plaque d'ancrage (11) étant pourvue d'une paire d'ouvertures traversantes (112) à l'intérieur desquelles insérer des vis d'ancrage (12, 12'), capable de passer par au moins une ouverture traversante présente dans le support de levage (10), dans lequel le support de levage (10) a une région constituée de deux extensions séparées d'une zone courbée afin d'envelopper partiellement le boulon pivotant (7) ou tout autre élément associé autour dudit boulon pivotant (7), chacune des extensions ayant l'une des ouvertures traversantes à l'intérieur desquelles les vis d'ancrage (12, 12') vont être insérées.

2. Système de serrage selon la revendication 1, **caractérisé en ce qu'**une douille d'ancrage (13) traversée par la vis d'ancrage (12') est prévue et située entre un support de levage inférieur (10) et une rondelle (14), supportée à une extrémité de la vis d'ancrage (12'), la vis d'ancrage (12') étant raccordée solidairement à la plaque d'ancrage (11).

3. Système de serrage selon la revendication 1, **caractérisé en ce qu'**il présente des moyens de réglage avec lesquels positionner le support de levage par rapport au support de suspension (2).

4. Système de serrage selon la revendication 3, **caractérisé en ce que** les moyens de réglage constituent une pluralité d'ouvertures alignées (16), qui sont disposées sur deux côtés opposés du support de levage (9, 10) à travers lequel une barre de support (17) est susceptible de passer.

5. Système de serrage selon la revendication 1, **caractérisé en ce qu'**il comporte des moyens de verrouillage avec lesquels maintenir le support de levage dans une position fixe par rapport au support de suspension (2).

6. Système de serrage selon l'une quelconque des revendications 3 à 5, **caractérisé en ce que** les moyens de verrouillage comprennent un élément de serrage (18), qui est monté à un point sur la barre de support (17) et qui est susceptible d'être inséré de façon amovible dans un logement (19) présent dans le support de suspension (2).

7. Système de serrage selon la revendication 2, **caractérisé en ce que** la vis d'ancrage (12') est reliée à la plaque d'ancrage (11) au moyen du soudage.
